# EUROPÄISCHE PATENTSCHRIFT

(11) **EP 1 023 404 B1**
(45) Veröffentlichungstag und Bekanntmachung des Hinweises auf die Patenterteilung: **07.08.2002**
(21) Anmeldenummer: 98954297.2
(22) Anmeldetag: 30.09.1998
(51) Int. Cl.: C09D 5/03, C09D 163/00, C08J 3/00

(54) **PULVERLACK-ZUSAMMENSETZUNG, VERFAHREN ZU DEREN HERSTELLUNG UND DEREN VERWENDUNG**
POWDER VARNISH COMPOSITION, METHOD FOR PRODUCING AND THE USE THEREOF
COMPOSITION DE PEINTURE PULVERULENTE, PROCEDE PERMETTANT DE LA PREPARER ET SON UTILISATION

(30) Priorität: 30.09.1997 DE 19743151
(43) Veröffentlichungstag der Anmeldung: 02.08.2000
(73) Patentinhaber: E.I. DU PONT DE NEMOURS AND COMPANY, Wilmington Delaware 19898 (US)
(72) Erfinder: DAVYDOV, Evgueni, D-40599 Düsseldorf (DE); ZIMMERMANN, Frank, Dieter, D-84160 Frontenhausen (DE)
(74) Vertreter: Hrabal, Ulrich, Dr.
(86) Internationale Anmeldenummer: EP9806199
(87) Internationale Veröffentlichungsnummer: WO9916837

(56) Entgegenhaltungen:
- DE-A- 2 147 653
- DE-A- 4 104 681
- DE-A- 4 114 209
- US-A- 5 321 063
- PATENT ABSTRACTS OF JAPAN vol. 010, no. 013 (C-323), 18. Januar 1986 & JP 60 168771 A (NIPPON YUSHI KK), 2. September 1985

## Beschreibung

Die Erfindung betrifft Pulverlack-Zusammensetzungen fiir die Beschichtung von Metallteilen, hergestellt durch eine besondere Verfahrensweise. Metallteile können sowohl Einzelteile, Platten sowie fertige Fabrikationsprodukte sein.

Metalloberflächen, beispielsweise von Aluminium und anderen Buntmetallen sowie Stahl, werden aus Korrosionsschutzgründen mit Überzügen, zunehmend mit pulverförmigen Überzugsmitteln versehen. Die Metalloberfläche muß für die Beschichtung so ausgestattet sein, daß sie eine ausreichende Haftung des Pulverlackes gewährleistet. Dies wird beispielsweise ermöglicht durch Vorbehandlung der Metalloberfläche mit Mitteln, die eine Abscheidung einer mikroskopischen Schicht von Kristallen bewirken und somit eine Passivierung der Oberfläche gegenüber Korrosion sowie Bindungsstellen für das Pulverlackmaterial hervorrufen. Derartige Vorbehandlungsmethoden sind beispielsweise Chromatierungen und Phosphatierungen, insbesondere Zink- oder Eisenphosphatierungen.

In zunehmenden Maße wird neben Aluminium und seinen Legierungen sowie blankem Stahl verzinkter Stahl mit einer Beschichtung aus korrosions- und witterungsbeständigen Pulverlacken eingesetzt. Dies kann sowohl feuerverzinkter als auch galvanisch verzinkter Stahl sein. Der besondere Vorteil des Einsatzes von verzinktem Stahl besteht darin, daß bei Beschädigungen des Pulverlacküberzuges ein Schutz vor Korrosion weiterhin gewährleistet wird allein durch den Zinküberzug. Durch derartige Zinküberzüge kann ein größerer Korrosionsschutz erzielt werden als durch die oben genannte Passivierungs-Vorbehandlung unverzinkter Metalloberflächen.

Pulverlacküberzüge haben allerdings auf verzinkten Metalloberflächen keine ausreichende Haftung. Um dies zu ermöglichen, müssen beispielsweise verzinkte Stahloberflächen mit Phosphatierungs-Lösungen vorbehandelt werden, beispielsweise gemäß DE-A-21 53 809, FR-A-26 81 333, WO 92/15727, welche danach mit einem Pulverlack, beispielsweise auf Basis von Polyester-, Epoxid-, Acrylat- und Alkydharzen, beschichtbar sind.

Darüber hinaus ist eine Beschichtung der verzinkten Stahloberfläche zunächst mit einem Primer möglich, bevor weitere Beschichtungsvorgänge folgen, siehe beispielsweise entsprechend JP-A 61 250 067 die Verwendung eines Pulverprimers auf der Basis eines Epoxid-Harzes und eines aromatischen Diamins.

Die vorgenannten Vorbehandlungsmethoden erfordern zusätzliche Verfahrensschritte der Primerung sowie der Phosphatierung und/oder Chromatierung und damit verbunden zusätzliche Arbeitsschritte wie Spülen, Trocknen, Beschichten, Einbrennen. Derartige Verfahren sind daher zeit- und kostenaufwendig sowie bezüglich der Chromatierung umweltgefährdend.

Darüber hinaus sind beispielsweise Stahl- oder Zink-Oberflächen beschichtbar mit einem Epoxid-Pulverlack, im wesentlichen bestehend aus einem Bisphenol A-Epoxidharz und einem phenolischen Vernetzer, zur Weiterbeschichtung mit einem Lack auf Basis eines Fluorkohlenwasserstoff-Harzes, gemäß JP-A-01 040 329. Anwendungsmöglichkeiten liegen beispielsweise im Bereich farbiger Bedachungen.

Es sind Pulverlack-Zusammensetzungen bekannt, bei deren Einsatz eine Vorbehandlung, beispielsweise eine Phosphatierungs-Vorbehandlung nicht erforderlich ist. Nach US-A-3 882 064 sind schnellhärtende Pulverlackzusammensetzungen auf galvanisiertem Stahl einsetzbar, welche als Bindemittel ein Epoxidharz-Gemisch sowie Polyethylenwachs und Dicyandiamid enthalten. Derartige Beschichtungszusammensetzungen sind geeignet als Schutzüberzüge für Lebensmittel- und Getränkebehälter und nicht vorgesehen für witterungsbeständige Beschichtungen.

EP-A-0 057 334 beschreibt die Beschichtung von galvanisiertem Metall mit einem Pulverlack, bei der das Metall vor der Beschichtung mit Säure gereinigt und anschließend gespült wird. Während der Reinigung, beispielsweise mit gering konzentrierten Lösungen an phosphoriger Säure, entsteht unter bestimmten Temperaturbedingungen nur ein sehr geringer Angriff auf die Zink-Oberfläche unter Ausbildung von sehr geringen Mengen an Zinkphosphatkristallen. Als Überzüge können Pulverlacke auf der Basis von Epoxid-, Polyester- und Acrylharzen sowie Mischungen davon eingesetzt werden. Beispielsweise werden Hybride als Mischungen von Polyester- und Epoxid-Harzen genannt. Ziel ist es, die dem Korrosionsschutz dienende Zinkbeschichtung so wenig wie möglich durch Vorbehandlungsmethoden anzugreifen und dennoch eine gute Haftung des Pulverlackes durch rasche Beschichtung nach Trocknung zu erreichen. Bei Anwendungen im Außenbereich sind diese Zusammensetzungen jedoch, insbesondere bei dauerhaften atmosphärischen Einflüssen, wetteranfällig.

Die bekannten Hybrid-Pulver, beispielsweise Mischungen aus Polyester- und Epoxidharzen im Verhältnis 50 : 50, werden nach der konventionellen Pulverlacktechnologie hergestellt, indem alle Komponenten einer Pulverlackrezeptur, wie Bindemittel, Härter, Additive und Pigmente sowie Füllstoffe, in einem Trockenmischer während einer auf den Mischertyp optimierten Mischzeit gemischt werden. Das so erhaltene Mischgut (Premix) wird mittels eines Extruders unter auf die jeweilige Rezeptur optimierten Temperatur- und Drehzahlbedingungen homogenisiert, z.B. extrudiert, und über entsprechende Kühltechnik abgekühlt sowie über einen Brecher vorzerkleinert. Dieses vorzerkleinerte Zwischenprodukt wird anschließend in entsprechenden Sichtermühlen auf die dem vorgesehenen Anwendungszweck angepaßte Kornverteilung feingemahlen. Werden derartige Hybrid-Pulver auf chemisch nicht vorbehandelte Metallsubstrate, z.B. verzinkten Stahl, appliziert, können Korrosionsschutz-Probleme auftreten durch Ablösung des Pulverfilmes. Außerdem können die bekannten Hybrid-Pulver in der oben genannten Zusammensetzung nicht als wetterbeständige Beschichtungssysteme eingesetzt werden.

Aufgabe der vorliegenden Erfindung ist es daher, ein spezielles Beschichtungsmaterial für Metalle und ein spezielles Verfahren zur Herstellung dieses Beschichtungsmaterials zu finden, so daß durch Auftrag einer einzigen Schicht ein guter Korrosionsschutz sowie eine gute Haftung des Beschichtungsmaterials auf der Metalloberfläche erreichbar ist und darüber hinaus je nach Anforderung eine sehr gute Wetterbeständigkeit erzielbar ist, so daß in nur einer zu applizierenden Schicht mehrere wichtige lacktechnische Eigenschaften vereint werden.

Es hat sich gezeigt, daß diese Aufgabe gelöst werden kann durch eine Pulverlack-Zusammensetzung, die durch eine ausgewählte Verfahrensweise erhältlich ist.

Gegenstand der Erfindung ist daher eine Pulverlack-Zusammensetzung, welche erhältlich ist durch homogenes Vermischen einer getrennt hergestellten teilchenförmigen Komponente
A aus einem oder mehreren Epoxidharzen mit einem Epoxyäquivalentgewicht von 250 bis 2500, einer oder mehreren Härterkomponenten sowie lacküblichen Hilfsund Zusatzstoffen und gegebenenfalls Pigmenten und/oder Füllstoffen und gegebenenfalls
   einer getrennt hergestellten teilchenförmigen Komponente
B aus einem oder mehreren von A unterschiedlichen Harzen mit einer Säurezahl von 20 bis 70 und/oder einer OH-Zahl von 10 bis 100 einer oder mehreren Härterkomponenten, lacküblichen Hilfs- und Zusatzstoffen sowie gegebenenfalls Pigmenten und Füllstoffen
in einem Mischungsverhältnis von Komponente A zu Komponente B von 1 : 99 bis 50 : 50, bezogen auf das Gewicht.

Einen weiteren Gegenstand der Erfindung bildet ein Verfahren, bei dem eine Pulverlack-Zusammensetzung, welche enthält
A ein oder mehrere Epoxidharze mit einem Epoxyäquivalentgewicht von 250 bis 2500, ein oder mehrere Härterkomponenten sowie lackübliche Hilfs- und Zusatzstoffe und gegebenenfalls Pigmenten und/oder Füllstoffen, und
B ein oder mehrere von A unterschiedliche Harze mit einer Säurezahl von 20 bis 70 und/oder einer OH-Zahl von 10 bis 100, ein oder mehrere Härterkomponenten sowie lackübliche Hilfs- und Zusatzstoffe und gegebenenfalls Pigmente und/oder Füllstoffe
in einem Mischungsverhältnis von Komponente A zu Komponente B wie 1: 99 bis 50 : 50 so hergestellt wird, daß zunächst die Komponente A und die Komponente B getrennt nach üblichen Pulverlackherstellungsverfahren hergestellt werden und anschließend beide Komponenten A und B im angegebenen Mischungsverhältnis einem weiteren Vorgang zur homogenen Vermischung der beiden Komponenten, beispielsweise einem Extrusionsvorgang, unterzogen werden.

Der Gehalt an Epoxidharz in der Komponente A kann beispielsweise in einem Bereich zwischen 10 Gew.-% und 95 Gew.-% liegen.

Die Härterkomponente ist in üblichen Mengen enthalten, im allgemeinen in einer zur Reaktion mit funktionellen Gruppen der Harzkomponente zur Erzielung des gewünschten Vernetzungsgrades geeigneten Menge.

Je nach Anforderung kann das Epoxidharz teilweise durch andere Harze, beispielsweise Epoxid-Novolak, Phenol- und/oder Melaminharz sowie durch Harze, die Epoxidgruppen enthalten, ersetzt sein.

Bezüglich Komponente B kann das Harz beispielsweise in einer Menge von 20 Gew.-% bis 95 Gew.-%, in dieser enthalten sein.

Der Anteil des Härters entspricht den üblichen Mengen, im allgemeinen einer zur Reaktion mit funktionellen Gruppen der Harzkomponente zur Erzielung des gewünschten Vernetzungsgrades geeigneten Menge.

Harze der Komponente B können beispielsweise Polyesterharze, (Meth)acrylatharze und modifizierte Copolymere sein. Vorzugsweise werden Polyesterharze und/oder (Meth)acrylatharze eingesetzt.

Erfindungsgemäß werden die Komponente A und die Komponente B getrennt nach üblichen Pulverlackherstellungsmethoden hergestellt, beispielsweise durch Mischen, Extrudieren, Abkühlen, Zerkleinern und daran anschließend gegebenenfalls Vermählen auf übliche Korngrößen.

Erfindungsgemäß liegen die Komponenten A und B teilchenförmig vor. Unter "teilchenförmig" ist zu verstehen, daß die Komponenten A und B in Pulverform einsetzbar sind oder in Form eines abgekühlten zerkleinerten Extrudats ohne Vermahlung auf übliche Korngrößen. Das abgekühlte und zerkleinerte Extrudat kann dabei grob und unregelmäßig geformt sein und als "chipsförmig" bezeichnet werden.

Die resultierenden Komponenten A und B werden daraufhin gemischt zu einer sogenannten Dryblend-Mischung, wobei das Verhältnis der Komponente A zu Komponente B 1: 99 bis 50 : 50 beträgt. Diese Mischung wird einem weiteren Homogenisierungs-Vorgang unterzogen. Daran anschließend erfolgt das Mahlen auf übliche Pulverkorngrößen.

Der weitere Homogenisierungsvorgang zum Vermischen der beiden Komponenten A und B kann alle geeigneten Verfahren zur homogenen Vermischung der beiden Komponenten einschließen.

Bevorzugt erfolgt die Homogenisierung aus der Schmelze.

Dies kann beispielsweise durch Extrusion der beiden Komponenten A und B geschehen. Dazu werden die Komponenten A und B beispielsweise intensiv trocken vorgemischt und anschließend in einem Extruder, beispielsweise bei Temperaturen von 70 bis 130°C, aufgeschmolzen und intensiv durchmischt. Das erhaltene Extrudat wird in dünnen Schichten ausgewalzt, abgekühlt und in ein grobes Granulat gebrochen, welches in einer Mühle zur gewünschten Korngröße der erfindungsgemäßen Pulverlack-Zusammensetzung vermahlen werden kann, beispielsweise in einen Korngrößenbereich von 1 bis 100 µm.

Des Weiteren kann das Homogenisieren der Komponenten A und B durch intensives Vermischen und Aufschmelzen der Komponenten und anschließendem Versprühen aus der Schmelze geschehen.

Eine weitere Möglichkeit zur Homogenisierung aus der Schmelze besteht zum Beispiel darin, eine niedermolekulare inerte Verbindung in Form von kompressiblen Fluiden, zum Beispiel Kohlendioxid, als Hilfsmittel einzusetzen. Dabei können die Pulverlacke A und B in dem überkritischen Fluid aufgelöst bzw. mit diesem homogen gemischt und die erhaltene Mischung unter Entspannung versprüht werden. Bevorzugt erfolgt das homogene Vermischen von A und B aus der Schmelze, zum Beispiel durch Extrusion.

Bevorzugt kommen je nach Anforderungsprofil Mischungen aus Komponente A zu Komponente B im Verhältnis 1 : 99 bis 10 : 90 fiir Beschichtungssysteme mit sehr guter Witterungsbeständigkeit und guter Haftung bzw. Korrosionsschutz und im Verhältnis 50 : 50 bis 15 : 85 für Beschichtungssysteme mit sehr guter Haftung bzw. Korrosionsschutz und guter Wetterbeständigkeit (jeweils bezogen auf das Gewicht) zum Einsatz.

Die verwendeten Pulverlacke basieren auf bekannten Bindemittelsystemen. Es handelt sich hierbei beispielsweise um Harze auf Epoxid-, Polyester- und/oder (Meth)acrylatbasis sowie gegebenenfalls weitere modifizierte Copolymere. Der hier verwendete Ausdruck steht für "Acryl und/oder Methacryl".

Die Epoxidpulverlacke gemäß Komponente A enthalten Epoxidharze als Hauptbindemittelkomponente. Beispiele für Epoxidharze sind Reaktionsprodukte aus Epichlorhydrin mit Bisphenol, beispielsweise Bisphenol A.

Es können übliche Härter für die Epoxidharze eingesetzt werden. Die Epoxidharze vernetzen häufig über carboxylgruppenhaltige, aber auch amid- oder amingruppenhaltige Härter. Als Härter können beispielsweise eingesetzt werden Dicyandiamid und seine Derivate, Carbonsäuren bzw. deren Anhydride.

Das Epoxidharz kann ganz oder teilweise durch weitere Harze wie Epoxid-Novolak, Phenolharz, Melaminharz sowie durch Harze, die Epoxidgruppen enthalten, ersetzt sein. Beispielsweise können Phenolharze auf der Basis von Phenol und Formaldehyd, wie sie beispielsweise als Resole oder Novolake bekannt sind, eingesetzt werden. Beispiele fiir Melaminharze sind butanol- und/oder methanolveretherte Melamine.

Als Komponente B können Polyesterpulverlackzusammensetzungen eingesetzt werden, bei denen der Bindemittelbestandteil carboxyl- und/oder hydroxylgruppenhaltige Polyester sind.

Hydroxylgruppenhaltige Polyester sind Kondensationsprodukte aus aliphatischen, aromatischen und/oder cycloaliphatischen Polycarbonsäuren und Polyalkoholen. Als Polycarbonsäuren können beispielsweise eingesetzt werden Phthalsäure, 1,4-Cyclohexandicarbonsäure, Tetrahydrophthalsäure, Adipinsäure, Sebazinsäure, Terephthalsäure, Trimelithsäureanhydrid sowie allgemein deren Anhydride und Ester. Beispiele fiir Polyalkohole sind Ethylen-, Diethylen-, Propylenglykol, Hexandiol, Neopentylglykol, Propandiol, Trimethylolpropan, Pentaerythrit, Neopentylglykolester von Hydroxypivalinsäure. Verwendbar sind auch jeweils die Mischungen davon. Carboxylfunktionalisierte Polyester sind ebenfalls durch Reaktion von Polycarbonsäuren und Glykolen herstellbar, jedoch mit einem Überschuß an Säuren.

Generell sind auch Mischungen aus carboxyl- und/oder hydroxylgruppenhaltigen Polyestern einsetzbar.

Als Härter sind übliche Härter, wie z.B. cycloaliphatische, aliphatische oder aromatische Polyisocyanate, epoxidgruppenhaltige Vernetzer, wie beispielsweise Triglycidylisocyanurat (TGIC), Polyglycidylether auf Basis Diethylenglykol, glycidylfunktionalisierte (Meth)acrylcopolymere sowie amino-, amido- oder hydroxylgruppenhaltige Vernetzer einsetzbar.

Weiterhin können in der Komponente B auch (Meth)acrylatharze und modifizierte Copolymere als Bindemittelbestandteil enthalten sein. Modifizierte Copolymere können übliche Copolymere sein, mit Modifizierungen, wie Epoxidgruppen, Carboxylgruppen, Hydroxylgruppen, Isocyanatgruppen und/oder Amidgruppen. Sie können beispielsweise jeweils zwei der genannten funktionellen Gruppen enthalten. Es kann sich dabei beispielsweise um modifizierte (Meth)acrylatharze handeln, wie Copolymere aus Alkyl(meth)acrylaten mit Glycidyl(meth)acrylaten und olefinischen Monomeren, wie Styrol und/oder Styrolderivaten. Es kann sich auch um modifizierte Vinylcopolymere beispielsweise auf der Basis glycidylgruppenhaltige Monomerer und eines oder mehrerer ethylenisch ungesättigter Monomerer, z.B. Alkyl(meth)acrylat, Styrol, Styrolderivate, (Meth)acrylamid handeln oder auch um gepfropfte Vinylcopolymere, die beispielsweise mit ethylenisch ungesättigten Säuren, ethylenisch ungesättigten Säurederivaten oder deren Anhydriden gepfropft sind.

Die Harze der Komponente B können allein oder in Mischungen untereinander vorliegen.

Es sind übliche Härter verwendbar, wie z.B. feste Dicarbonsäuren, beispielsweise mit 10 bis 12 Kohlenstoffatomen sowie carboxyfunktionelle Polymere.

Zur Herstellung der erfindungsgemäßen Komponenten A und B können anorganische und/oder organische Pigmente, Füllstoffe und/oder lackübliche Hilfs- und Zusatzstoffe in den üblichen Mengen zugesetzt werden. Bei den lacküblichen Hilfs- und Zusatzstoffen handelt sich um lackübliche Additive, wie sie auf dem Lacksektor geläufig sind. Die Mengen liegen im üblichen, dem Fachmann geläufigen Bereich. Beispielsweise können die erfindungsgemäßen Komponenten A und B jeweils 0 bis 50 Gew.-% eines oder mehrerer Pigmente und/oder Füllstoffe enthalten. Die Menge der Additive kann beispielsweise bei 0,01 bis 10 Gew.-% liegen.

Beispiele für übliche Hilfs- und Zusatzstoffe der Komponenten A und B sind Verlaufsmittel, Entgasungsmittel, Thixotropiemittel und Beschleuniger und andere. Als Verlaufsmittel sind verwendbar beispielsweise (Meth)acrylpolymere, (Meth)acrylcopolymere, Siliciumcopolymere, als Thixotropiemittel beispielsweise Silicium-Verbindungen und als Beschleuniger beispielsweise Amin-, Amid- und Imidazolverbindungen, Anhydride und organische Salze. Darüber hinaus können weitere lackübliche Additive in den Zusammensetzungen der Komponenten A und B eingearbeitet sein. Dies sind Additive, die beispielsweise der Verbesserung der Kratzfestigkeit, der Haftung, der UV-Beständigkeit, der Dispergierbarkeit, des Glanzes dienen und dem Fachmann geläufig sind.

Eine erfindungsgemäße Komponente A kann beispielsweise 40 bis 70 Gew.-% Epoxidharz, 2 bis 30 Gew.-% Härter, 0 bis 50 Gew.-% Füllstoff und 0 bis 50 Gew.-% anorganische und/oder organische Pigmente, gegebenenfalls neben weiteren Zusatzstoffen und Additiven enthalten.

Die Komponente B kann beispielsweise 40 bis 70 Gew.-% Polyesterharz, 2 bis 30 Gew.-% Härter, 0 bis 50 Gew.-% Füllstoff und 0 bis 50 Gew.-% anorganische und/oder organische Pigmente, gegebenenfalls neben weiteren Zusatzstoffen und Additiven enthalten.

Das Herstellen der Komponenten A und B sowie das Mischen der hergestellten Komponenten A und B kann nach der bereits beschriebenen konventionellen Technologie der Pulverherstellungsverfahren, beispielsweise Extrudierverfahren, erfolgen.

Die erfindungsgemäß hergestellte Pulverlack-Zusammensetzung kann nach dem Mahlvorgang mit bekannten Mahlaggregaten eine übliche Korngrößenverteilung von 1 bis 200 µm aufweisen, vorzugsweise bis 100 µm.

Die erfindungsgemäße Pulverlack-Zusammensetzung kann mit den für Pulverlack üblichen Methoden auf Metalloberflächen appliziert und eingebrannt werden. Als Metalle sind beispielsweise verwendbar Aluminium und seine Legierungen, weitere Buntmetalle sowie Stahl und verzinkter Stahl. Das Einbrennen dieser Pulverlack-Systeme erfolgt nach den für eine vollständige Vernetzung erforderlichen Temperaturund Zeitbedingungen. Beispielsweise kann bei Objekttemperaturen von 100°C bis 250°C in einem Zeitraum von 40 bis 1 Minute eingebrannt werden.

Je nach Anforderung an das beschichtete Objekt kann auch eine chemische Vorbehandlung bzw. eine Primerung der Metalloberfläche erforderlich sein.

Die erfindungsgemäßen Pulverlacksysteme sind geeignet für den Einsatz im Außenbereich für Metalloberflächen, die der Witterung auf Dauer ausgesetzt sind. Beispielsweise eignen sich die Pulverlack-Zusammensetzungen für Metalloberflächen wie Fassadenelemente, Zaunanlagen, Stahlkonstruktionen, Gartengeräte, Fahrzeugteile.

Durch die erfindungsgemäße Pulverlack-Zusammensetzung wird eine gute Haftung und Korrosionsbeständigkeit sowie Witterungsbeständigkeit auf Metalloberflächen erreicht, dabei kann häufig ohne übliche Vorbehandlung oder Grundierung gearbeitet werden. Mit den erfindungsgemäß hergestellten Pulverlacksystemen können je nach Anforderung Pulversysteme mit sehr guter Wetterbeständigkeit und gutem Korrosionsschutz, z.B. bei Fassadenelementen bzw. mit guter Wetterbeständigkeit und sehr gutem Korrosionsschutz, z.B. bei Stahlkonstruktionen, insbesondere in Industrieatmosphäre, gezielt durch die erfindungsgemäße Kombination zwischen Komponente A und Komponente B hergestellt werden. Somit können in nur einer zu applizierenden Schicht mehrere wichtige gewünschte Lackeigenschaften zielgerecht vereint werden, während üblicherweise zur Erzielung der gewünschten Lackeigenschaften Mehrfachbeschichtungen erforderlich sind.

Die Erfindung soll anhand der folgenden Beispiele erläutert werden:

### Beispiel 1

### Herstellung der Komponente A

500 Gew.-Teile eines Epoxidharzes mit einem Epoxid-Äquivalentgewicht von 1500, 20 Gew.-Teile Dicyandiamid, 10 Gew.-Teile Verlaufsmittel auf Silikonbasis, 150 Gew.-Teile Bariumsulfat sowie 200 Gew.-Teile Titandioxid werden gemischt und dann extrudiert in einem üblichen Extruder bei einer Temperatur von 80 bis 130°C. Anschließend erfolgt das Abkühlen und Zerkleinern sowie das Mahlen auf eine durchschnittliche Korngröße von 20 bis 80 µm.

### Beispiel 2

### Herstellung der Komponente B

500 Gew.-Teile eines Polyesterharzes mit einer OH-Zahl von 50 (COOH-Zahl von 40), 37 Gew.-Teile eines üblichen Härters, 6 Gew.-Teile eines üblichen Beschleunigers, 10 Gew.-Teile eines Verlaufsmittels auf Silikonbasis, 150 Gew.-Teile Bariumsulfat und 200 Gew.-Teile Titandioxid werden entsprechend Beispiel 1 gemischt, extrudiert, zerkleinert und auf eine durchschnittliche Korngröße von 20 bis 80 µm gemahlen.

### Beispiel 3

Testung der Wetterbeständigkeit und Korrosionsbeständigkeit.

Die beispielsweise gemäß Beispiel 1 und 2 hergestellten Komponenten A und B werden in folgenden Verhältnissen gemischt (bezogen auf Gewichtsteile):
1. A : B = 5 : 95
2. A : B = 10 : 90
3. A : B = 30 : 70
4. A : B = 50 : 50

Diese Mischungen werden bei einer Temperatur von 80 bis 130°C in einem Extruder homogenisiert und anschließend auf einen Korngrößenbereich von 1 bis 100 µm gemahlen. Das erhaltene Pulver wird in einer Schichtdicke von 60 bis 100 µm auf entfettetes Stahlblech appliziert und bei 200°C Objekttemperatur in einer Zeit von 10 Minuten eingebrannt.

In der Tabelle sind die Prüfergebnisse bezüglich des Verhaltens der Pulverlackschicht auf der Metalloberfläche (Korrosionsschutz und Wetterbeständigkeit) aufgeführt. Diese Ergebnisse werden verglichen mit den Ergebnissen, die erhalten werden bei Applikation von konventionellen Polyesterpulverlack (Tabelle Punkt 1), Epoxid-Pulver (Tabelle Punkt 2), Hybrid-Pulverlack (entsprechend Tabelle Punkt 3 und 4) sowie bei Applikation eines Zweischicht-Pulverlackes, bei dem die erste Schicht aus einem Epoxidpulverlack und die zweite Schicht aus einem Polyesterpulverlack besteht (siehe Tabelle Punkt 9).

Die Prüfergebnisse im Salzsprüh-Test nach DIN 50021 (1000 Std.) und im QUVB-Schnellbewitterungsgerät (250 Std.) ergaben, daß die erfindungsgemäßen Zusammensetzungen gemäß Punkt 5 und 6 eine gute Wetterbeständigkeit bei gleichzeitig guter Korrosionsbeständigkeit, insbesondere bei Mischungen zwischen Komponente A und B im Verhältnis 5 : 95 bis 10 : 90, aufweisen. Diese Prüfergebnisse waren praktisch mit einem Zweischichtaufbau gemäß Tabelle Punkt 9 vergleichbar. Überraschend sind diese Ergebnisse deshalb, weil die für die Formulierung benutzten Komponenten A und B oder Hybrid-Pulverlacke als einzelne Beschichtungsstoffe angewendet nicht in der Lage sind, die beiden wesentlichen Eigenschaften, sehr guter Korrosionsschutz und sehr gute Wetterbeständigkeit, in einem Material auf nicht speziell vorbehandelten Metallsubstraten zu vereinigen.

Beschichtungen auf der Basis von konventionellen Hybrid-Pulvern entsprechend Punkt 3 und 4 zeigen dagegen bezüglich des Glanzes schlechtere Werte und waren nicht korrosionsfest.

Werden die nach Beispiel 1 und 2 hergestellten Komponenten A und B nach getrennter Extrudierung im erfindungsgemäßen Verhälnis A : B wie 1 : 99 bis 50 : 50 als Pulver trocken gemischt, jedoch nicht noch einmal erfindungsgemäß homogenisiert, und die erhaltene Pulvermischung in üblicher Weise appliziert gemäß den oben genannten Bedingungen, erreicht man zwar eine ausreichende Wetterbeständigkeit jedoch keine ausreichende Haftung bei mechanischer Beanpruchung der Beschichtung und somit nur einen geringen Korrosionsschutz bzw. einen ausreichenden Korrosionsschutz mit nur geringer Wetterbeständigkeit.

| | | QUVB-Belichtung Restglanz nach 250h, % | Korrosionstest nach DIN50021 auf dem entfetteten Stahl (Unterwanderung vom Anschnitt nach 1000h, mm) |
|---|---|---|---|
| 1 | Polyesterpulverlack (wie B) | >50 | vollständig enthaftet nach 240h |
| 2 | Epoxidpulverlack (wie A) | 3 | 12 |
| 3 | Konventionelles Hybrid Pulver B:A = 50:50 | 12 | vollständig enthaftet nach 240h |
| 4 | Konventionelles Hybrid Pulver B:A = 70:30 | 20 | vollständig enthaftet nach 240h |
| 5 | Erfindung B:A = 95:5 | >50 | 16 |
| 6 | Erfindung B:A = 90:10 | 50 | 14 |
| 7 | Erfindung B:A = 70:30 | 25 | 12 |
| 8 | Erfindung B:A = 50:50 | 15 | 12 |
| 9 | 2 Schichten: 1. Pulver A, 2. Pulver B | >50 | 12 |

## Patentansprüche

1. Pulverlack-Zusammensetzung, erhältlich durch homogenes Vermischen einer getrennt hergestellten teilchenförmigen Komponente
A aus einem oder mehreren Epoxidharzen mit einem Epoxyäquivalentgewicht von 250 bis 2500, einer oder mehreren Härterkomponenten sowie lacküblichen Hilfs- und Zusatzstoffen und gegebenenfalls Pigmenten und/oder Füllstoffen und
einer getrennt hergestellten teilchenförmigen Komponente
B aus einem oder mehreren von A unterschiedlichen Harzen mit einer Säurezahl von 20 bis 70 und/oder einer OH-Zahl von 10 bis 100, einer oder mehreren Härterkomponenten sowie lacküblichen Hilfs- und Zusatzstoffen und gegebenenfalls Pigmenten und/oder Füllstoffen,
in einem Mischungsverhältnis von Komponente A zu Komponente B von 1 : 99 bis 50 : 50, bezogen auf das Gewicht.

2. Pulverlack-Zusammensetzung nach Anspruch 1, **dadurch gekennzeichnet, daß** die Pulverlackkomponenten A und B nach getrennter Herstellung in einem Mischungsverhältnis von Komponente A zu Komponente B wie 1 : 99 bis 10 : 90 gemischt werden.

3. Pulverlack-Zusammensetzung nach Anspruch 1, **dadurch gekennzeichnet, daß** die Pulverlackkomponenten A und B nach getrennter Herstellung in einem Mischungsverhältnis von Komponente A zu Komponente B wie 50 : 50 bis 15 : 85 gemischt werden.

4. Pulverlack-Zusammensetzung nach Anspruch 1 bis 3, **dadurch gekennzeichnet, daß** zur Herstellung der Pulverlack-Zusammensetzung das Epoxidharz der Komponente A teilweise durch Epoxid/Novolak, Phenol- und Melaminharze ersetzt ist und die Harze der Komponente B Polyesterharze, (Meth)acrylatharze und/oder modifizierte Copolymere sind.

5. Verfahren zur Herstellung einer Pulverlack-Zusammensetzung durch Bereiten einer teilchenförmigen Pulverlackkomponente
A aus einem oder mehreren Epoxidharzen mit einem Epoxyäquivalentgewicht von 250 bis 2500, einer oder mehreren Härterkomponenten sowie gegebenenfalls lacküblichen Hilfs- und Zusatzstoffen und gegebenenfalls Pigmenten und/oder Füllstoffen in üblicher Weise und
getrenntes Bereiten einer teilchenförmigen Pulverlackkomponente
B aus einem oder mehreren von A unterschiedlichen Harzen mit einer Säurezahl von 20 bis 70, und/oder einer OH-Zahl von 10 bis 100, einer oder mehreren Härterkomponenten, gegebenenfalls lacküblichen Hilfs- und Zusatzstoffen und gegebenenfalls Pigmenten und/oder Füllstoffen, und
Vermischen der Komponenten A und B in einem Mischungsverhältnis von 1 : 99 bis 50 : 50, bezogen auf das Gewicht, worauf anschließend beide Komponenten A und B im angegebenen Mischungsverhältnis einem weiteren Vorgang zur homogenen Vermischung der beiden Komponenten unterzogen werden.

6. Verfahren gemäß Anspruch 5, **dadurch gekennzeichnet, daß** die homogene Vermischung der beiden Komponenten A und B aus der Schmelze, z.B. durch Extrusion, geschieht.

7. Verwendung der Pulverlack-Zusammensetzung nach einem der Ansprüche 1 bis 4, oder hergestellt nach dem Verfahren von Anspruch 5 für die Beschichtung von Metalloberflächen.

## Claims

1. Powder coating composition, obtainable by homogeneously mixing a separately prepared particulate component
A consisting of one or more epoxy resins having an epoxy equivalent weight of from 250 to 2500, one or more curing agent components, as well as auxiliary substances and additives conventional in lacquers and, optionally, pigments and/or fillers, and
a separately prepared particulate component
B consisting of one or more resins other than A having an acid number of from 20 to 70 and/or an OH number of from 10 to 100, one or more curing agent components, as well as auxiliary substances and additives conventional in lacquers and, optionally, pigments and/or fillers,
in a mixing ratio of component A to component B of from 1:99 to 50:50, based on the weight.

2. Powder coating composition according to claim 1, **characterised in that** powder coating components A and B, after being prepared separately, are mixed in a mixing ratio of component A to component B such as from 1:99 to 10:90.

3. Powder coating composition according to claim 1, **characterised in that** powder coating components A and B, after being prepared separately, are mixed in a mixing ratio of component A to component B such as from 50:50 to 15:85.

4. Powder coating composition according to claim 1 to 3, **characterised in that**, for the production of the powder coating composition, some of the epoxy resin of component A has been replaced by epoxide/novolak, phenol and melamine resins, and the resins of component B are polyester resins, (meth)acrylate resins and/or modified copolymers.

5. Process for the production of a powder coating composition by preparing, in the conventional manner, a particulate powder coating component
A consisting of one or more epoxy resins having an epoxy equivalent weight of from 250 to 2500, one or more curing agent components, as well as, optionally, auxiliary substances and additives conventional in lacquers and, optionally, pigments and/or fillers, and
separately preparing a particulate powder coating component
B consisting of one or more resins other than A having an acid number of from 20 to 70 and/or an OH number of from 10 to 100, one or more curing agent components, optionally auxiliary substances and additives conventional in lacquers and, optionally, pigments and/or fillers, and
mixing components A and B in a mixing ratio of from 1:99 to 50:50, based on the weight, the two components A and B in the indicated mixing ratio subsequently being subjected to a further operation for the homogeneous mixing of the two components.

6. Process according to claim 5, **characterised in that** the homogeneous mixing of the two components A and B takes place from the melt, for example by extrusion.

7. Use of the powder coating composition according to any one of claims 1 to 4, or produced according to the process of claim 5, for the coating of metal surfaces.

## Revendications

1. Composition de peinture en poudre pouvant être obtenue par un mélange homogène d'un composant sous forme de particules, fabriqué séparément,
A. comprenant une ou plusieurs résines époxy ayant un poids équivalent époxy compris entre 250 et 2500, un ou plusieurs composants de durcisseur, ainsi que des produits auxiliaires et des additifs habituels aux peintures et, le cas échéant, des pigments et/ou des matières de remplissage, et
d'un composant sous forme de particules, fabriqué séparément,
B. comprenant une ou plusieurs résines différentes de A, ayant un indice d'acide compris entre 20 et 70 et/ou un indice hydroxyle (OH) compris entre 10 et 100, un ou plusieurs composants de durcisseur, ainsi que des produits auxiliaires et des additifs habituels aux peintures et, le cas échant, des pigments et/ou des matières de remplissage,
dans un rapport de mélange du composant A sur le composant B, compris entre 1:99 et 50:50 par rapport au poids.

2. Composition de peinture en poudre selon la revendication 1, **caractérisée en ce que** les composants A et B de la peinture en poudre, après fabrication séparée, sont mélangés dans un rapport de mélange du composant A sur le composant B, compris entre 1:99 et 10:90.

3. Composition de peinture en poudre selon la revendication 1, **caractérisée en ce que** les composants A et B de la peinture en poudre, après fabrication séparée, sont mélangés dans un rapport de mélange du composant A sur le composant B, compris entre 50:50 et 15:85.

4. Composition de peinture en poudre selon les revendications 1 à 3, **caractérisée en ce que**, pour la fabrication de la composition de la peinture en poudre, la résine époxy du composant A est remplacée partiellement par un mélange époxy/novolaque et par des résines phénoliques et de mélamine, les résines du composant B étant des résines polyesters, des résines de méthacrylate et/ou des copolymères modifiés.

5. Procédé de fabrication d'une composition de peinture en poudre obtenue par la préparation d'un composant de peinture en poudre, sous forme de particules,
A. comprenant une ou plusieurs résines époxy ayant un poids équivalent époxy compris entre 250 et 2500, un ou plusieurs composants de durcisseur ainsi que, le cas échéant, des produits auxiliaires et des additifs habituels aux peintures et, le cas échéant, des pigments et/ou des matières de remplissage ajoutés de façon habituelle, et
par la préparation séparée d'un composant de peinture en poudre, sous forme de particules,
B. comprenant une ou plusieurs résines différentes de A, ayant un indice d'acide compris entre 20 et 70 et/ou un indice hydroxyle (OH) compris entre 10 et 100, un ou plusieurs composants de durcisseur ainsi que, le cas échéant, des produits auxiliaires et des additifs habituels aux peintures et, le cas échant, des pigments et/ou des matières de remplissage, et
par le mélange des composants A et B dans un rapport de mélange compris entre 1:99 et 50:50 par rapport au poids, après quoi, les deux composants A et B sont soumis ensuite, dans le rapport de mélange indiqué, à un autre processus permettant d'obtenir le mélange homogène des deux composants.

6. Procédé selon la revendication 5, **caractérisé en ce que** le mélange homogène des deux composants A et B résulte de la fusion, par exemple par extrusion.

7. Utilisation de la composition de peinture en poudre selon l'une quelconque des revendications 1 à 4, ou fabriquée selon le procédé de la revendication 5 pour le revêtement de surfaces métalliques.
